# FASCICULE DE BREVET EUROPEEN

(11) **EP 2 667 050 B1**
(45) Date de publication et mention de la délivrance du brevet: **08.05.2019**
(21) Numéro de dépôt: 13168939.0
(22) Date de dépôt: 23.05.2013
(51) Int. Cl.: F16F 15/14

(54) **Dispositif de transmission de couple pour un véhicule automobile**
Vorrichtung zur Übertragung des Motordrehmoments für ein Kraftfahrzeug
Torque transmission device for a motor vehicle

(30) Priorité: 23.05.2012 FR 1254713
(43) Date de publication de la demande: 27.11.2013
(73) Titulaire: Valeo Embrayages, 80009 Amiens Cedex 2 (FR)
(72) Inventeur: Rost, Jonathan, 80000 Amiens (FR); Tondellier, Clément, 80520 Woincourt (FR)
(74) Mandataire: Cardon, Nicolas

(56) Documents cités:
- EP-A2- 2 282 078
- DE-A1-102009 002 481
- DE-A1-102010 034 812
- DE-A1-102010 054 296
- FR-A1- 2 781 030

## Description

La présente invention concerne un dispositif de transmission de couple pour un véhicule automobile, et en particulier un double volant amortisseur.

Le document FR 2 826 079 décrit un double volant amortisseur pour un véhicule automobile, comportant un volant primaire destiné à être couplé à un arbre moteur, tel par exemple qu'un vilebrequin, et un volant secondaire, destiné à être couplé à un arbre d'entrée d'une boîte de vitesses par l'intermédiaire d'un embrayage.

Le volant primaire comprend plus particulièrement deux éléments, un volant moteur et un couvercle, soudés l'un à l'autre à leur périphérie radialement externe de manière à délimiter un volume interne étanche dans lequel sont montés des organes élastiques courbes.

Les organes élastiques s'étendent circonférentiellement et prennent appui, à une première extrémité, sur le volant moteur et/ou sur le couvercle et, à une seconde extrémité, sur un voile annulaire appartenant au volant secondaire.

En fonctionnement, les organes élastiques sont plaqués contre des goulottes disposées en périphérie externe du volume précité sous l'effet de la force centrifuge. Ce volume comporte de la graisse permettant de garantir le bon fonctionnement des organes élastiques.

Le dispositif de transmission de couple comporte en outre des moyens d'amortissement pendulaires, logés dans le volume interne précité, et comportant des masses pendulaires montées de façon mobile sur le voile annulaire, notamment par l'intermédiaire de rouleaux de guidage. Ces masses sont disposées radialement à intérieur ou à l'extérieur des organes élastiques courbes.

Les parties centrales des rouleaux de guidage sont montées dans des trous oblongs en forme d'arc du voile annulaire. Les bords des trous oblongs forment ainsi des chemins de roulement pour les parties centrales des rouleaux.

Or, le couple transmis par le voile annulaire en fonctionnement peut provoquer une déformation de celui-ci et donc une déformation des bords des trous oblongs formant les chemins de roulement. Ceci peut avoir un impact sur la trajectoire et, plus généralement, sur le déplacement des masses pendulaires, ce qui peut affecter l'efficacité des moyens d'amortissement pendulaires. Un amortisseur similaire est décrit dans le document DE 10 2010 054 296 A1.

La demande de brevet FR 1251109 déposée par la Demanderesse et non encore publiée, répond à ce problème en proposant de monter les masses annulaires sur des supports indépendants du voile annulaire et fixés sur ce dernier.

Les masses pendulaires ne sont ainsi pas montées directement sur le voile annulaire, mais sur des supports indépendants qui n'assurent pas la fonction de transmission de couple et qui ne sont pas déformés en fonctionnement.

La trajectoire des masses pendulaires n'est alors pas affectée par une éventuelle déformation du voile annulaire, de sorte que l'efficacité des moyens d'amortissement est préservée. En outre, le support est lié en rotation au voile annulaire, dans une zone distincte de celle servant au montage des masses pendulaires. On s'assure ainsi que le support n'est pas déformé dans sa zone servant au montage desdites masses. Un tel dispositif de transmission de couple permet en outre une meilleure répartition des efforts sur les moyens de fixation des supports annulaires sur le voile annulaire.

L'utilisation de supports distincts augmente toutefois l'inertie du voile annulaire ainsi que la complexité et le coût du double volant amortisseur.

Par ailleurs, dans les dispositifs de transmission de couple connus, le mouvement des masses pendulaires est limité par des moyens de butée et d'amortissement présentant des surfaces d'appui relativement faibles. Cela est notamment le cas dans les documents DE 10 2009 042 836 et EP 1 744074.

En particulier, le document DE 10 2009 042 836 décrit un dispositif de transmission de couple comportant un support annulaire mobile, de part et d'autre duquel sont montés circonférentiellement des masses pendulaires, par l'intermédiaire notamment de rouleaux de guidage engagés dans des trous oblongs en arc de cercle des masses et du support.

Le déplacement des masses pendulaires est limité par butée de ces dernières sur des éléments d'amortissement formés par des anneaux en élastomère montés sur des rivets fixés dans des trous du support mobile, entre les extrémités circonférentielles correspondantes des masses pendulaires. Les surfaces d'appui des masses pendulaires sur les anneaux sont relativement faibles. En outre, lors de l'appui des masses pendulaires, seules les parties des anneaux en élastomère situées entre le rivet et les extrémités des masses pendulaires sont déformées.

L'amortissement réalisé par ces moyens de butée a donc une efficacité limitée, de sorte que des bruits parasites audibles par un conducteur peuvent être générés, en particulier lors du démarrage ou de l'arrêt du moteur.

L'invention a notamment pour but d'apporter une solution simple, efficace et économique aux problèmes précités.

A cet effet, elle propose un dispositif de transmission de couple pour un véhicule automobile, comportant un élément d'entrée de couple et un voile annulaire mobiles en rotation l'un par rapport à l'autre, et des organes élastiques montés entre l'élément d'entrée et le voile annulaire de sortie de couple et agissant à l'encontre de la rotation de l'élément d'entrée de couple par rapport au voile annulaire, le voile annulaire comportant des pattes d'appui des organes élastiques s'étendant radialement vers l'extérieur depuis une zone annulaire de sortie de couple située au niveau de la périphérie interne du voile annulaire, le dispositif comportant en outre des moyens d'amortissement pendulaires comprenant au moins une masse pendulaire montée de façon mobile sur le voile annulaire, caractérisé en ce que le voile annulaire comporte au moins une zone de support de la masse pendulaire s'étendant radialement vers l'extérieur depuis la zone annulaire de sortie de couple et présentant au moins un chemin de guidage de moyens d'articulation de la masse pendulaire, ladite zone de support étant bordée par des évidements s'étendant radialement vers l'intérieur au-delà desdits chemins de guidage.

Elle propose également un dispositif de transmission de couple pour un véhicule automobile, comportant un élément d'entrée de couple et un voile annulaire de sortie de couple mobiles en rotation l'un par rapport à l'autre, et des organes élastiques montés entre l'élément d'entrée et le voile annulaire de sortie de couple et agissant à l'encontre de la rotation de l'élément d'entrée de couple par rapport au voile annulaire, le voile annulaire comportant des pattes d'appui des organes élastiques s'étendant radialement vers l'extérieur depuis une zone annulaire de sortie de couple située au niveau de la périphérie interne du voile annulaire, le dispositif comportant en outre des moyens d'amortissement pendulaires comprenant au moins une masse pendulaire montée de façon mobile sur le voile annulaire , caractérisé en ce que le voile annulaire comporte au moins une zone de support de la masse pendulaire s'étendant radialement vers l'extérieur depuis la zone annulaire de sortie de couple et présentant deux chemins de guidage de moyens d'articulation d'une même masse pendulaire, ladite zone de support étant bordée par des évidements s'étendant radialement vers l'intérieur.

Le décalage radial de la zone de support des masses pendulaires à l'extérieur de la zone de sortie de couple du voile annulaire ainsi que la présence des évidements de part et d'autre de la zone de support, évitent que ladite zone de support et le chemin de guidage se déforment en fonctionnement, de façon à garantir le bon fonctionnement des masses pendulaires ainsi que la qualité de l'amortissement des vibrations et des acyclismes de rotation du moteur.

De manière avantageuse, lesdits évidements s'étendent au-delà desdits chemins de guidage.

De manière avantageuse, lesdits évidements définissent deux faces d'appui latérales de la zone de support, la masse pendulaire comportant au moins deux moyens de butée et d'amortissement latéraux aptes à venir en appui respectivement sur les faces d'appui latérales de la zone de support, dans deux positions extrêmes de la masse pendulaire.

Il est ainsi possible d'ajuster les dimensions des faces d'appui latérales de la zone de support ainsi que celles des moyens de butée et d'amortissement latéraux en fonction des besoins, de manière à offrir un bon amortissement de chaque masse pendulaire dans ses positions extrêmes.

On peut donc réduire considérablement les chocs et les bruits générés par les masses pendulaires, en particulier lors du démarrage et de l'arrêt du moteur.

Selon une caractéristique de l'invention, les faces d'appui latérales de la zone de support sont planes, les moyens de butée et d'amortissement comportant des faces planes destinées à venir en appui contre les faces latérales de la zone de support.

Une telle caractéristique permet d'augmenter encore la surface d'appui et d'amortissement.

De préférence, au moins l'un des moyens de butée et d'amortissement de la masse pendulaire est apte à venir en appui contre l'une des pattes d'appui des organes élastiques.

Ainsi, dans l'une des positions extrêmes au moins, la masse pendulaire peut prendre appui, par l'intermédiaire de ses moyens de butée et d'amortissement, non seulement au niveau de la zone de support du voile annulaire, mais également au niveau de l'une des pattes précitées.

Le contact peut se produire simultanément dans ces deux zones ou de façon légèrement décalée dans le temps. Dans ce dernier cas, les constantes de raideur en jeu augmentent progressivement, ce qui assure une certaine progressivité de l'amortissement réalisé.

Selon une forme de réalisation de l'invention, le dispositif comporte au moins deux masses pendulaires adjacentes montées circonférentiellement entre deux pattes d'appui des organes élastiques s'étendant radialement vers l'extérieur, des premières extrémités des masses pendulaires venant en appui contre lesdites pattes, par l'intermédiaire de premiers moyens de butée et d'amortissement, des secondes extrémités des masses pendulaires venant en appui l'une sur l'autre, par l'intermédiaire de seconds moyens de butée et d'amortissement.

Selon une autre forme de réalisation, chaque masse pendulaire est montée entre une patte d'appui des organes élastiques et une patte de butée s'étendant radialement vers l'extérieur depuis la zone annulaire de sortie de couple du voile annulaire, la masse pendulaire étant destinée à venir en appui sur l'une des pattes par l'intermédiaire d'un premier moyen de butée et d'amortissement, et à venir en appui sur l'autre des pattes par l'intermédiaire d'un second moyen de butée et d'amortissement.

Les moyens de butée et d'amortissement latéraux des masses pendulaires peuvent comporter chacun une première face plane destinée à venir en appui sur la face latérale plane correspondante de la zone de support du voile annulaire, et une seconde face plane destinée à venir en appui sur une face plane de la patte correspondante ou de la masse pendulaire adjacente.

Chaque moyen de butée assure ainsi deux fonctions de butée, à l'aide de deux faces planes opposées.

Selon une caractéristique de l'invention, le voile annulaire comporte plusieurs secteurs indépendants dont certains comportent les pattes d'appui des organes élastiques et dont au moins un autre comporte la zone de support de la masse pendulaire, chaque secteur comportant des moyens de fixation à sa périphérie radialement interne.

Le fait de séparer le voile annulaire en secteurs indépendants permet de garantir que le secteur supportant la masse n'est pas déformé lors de la transmission du couple au travers des secteurs comportant les pattes servant d'appui aux organes élastiques.

La masse pendulaire peut comporter deux flancs en forme d'arc, disposés de part et d'autre de la zone de support du voile annulaire, reliés entre eux par des entretoises portant les moyens de butée et d'amortissement de la masse pendulaire.

Dans ce cas, la masse pendulaire peut comporter une partie additionnelle située radialement à l'extérieur de la zone de support et montée entre les deux flancs, de façon à augmenter la masse de la masse pendulaire et améliorer ainsi la filtration des vibrations et des acyclismes de rotation.

En variante, la masse pendulaire a une forme d'arc et une section générale en U venant coiffer la zone de support du voile annulaire, définissant une base en forme d'arc située radialement à l'extérieur de la zone de support du voile annulaire et à partir de laquelle s'étendent deux flancs situés de part et d'autre de ladite zone de support et dirigés radialement vers l'intérieur.

Selon une autre caractéristique de l'invention, ladite zone de support comporte au moins un évidement situé entre les deux chemins de guidage des moyens d'articulation d'une même masse pendulaire et s'étendant sensiblement radialement vers l'intérieur.

Une telle caractéristique permet d'augmenter l'espace disponible pour la partie additionnelle de la masse pendulaire.

Avantageusement, l'évidement s'étend par rapport à une ligne passant par le centre des moyens d'articulation d'une même masse pendulaire : au dessus de ladite ligne, ou en dessous de ladite ligne, ou jusqu'à ladite ligne. On entend par au dessus de la ligne, une zone située entre ladite ligne et un bord périphérique extérieur de la zone de support. On entend par en dessous de la ligne, une zone située entre ladite ligne et une partie annulaire de sortie de couple du voile.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue éclatée, en perspective, d'un dispositif de transmission de couple selon l'invention, se présentant sous la forme d'un double volant amortisseur,
- la figure 2 est une vue partiellement éclatée, en perspective, d'une partie du double volant amortisseur de la figure 1,
- les figures 3 et 4 sont des vues de face, d'une partie du double volant amortisseur de la figure 1, dans deux positions des masses pendulaires,
- la figure 5 est une vue correspondant à la figure 4, d'un autre mode de réalisation de l'invention,
- les figures 6 à 9 sont des vues de détail illustrant trois autres modes de réalisation de l'invention.

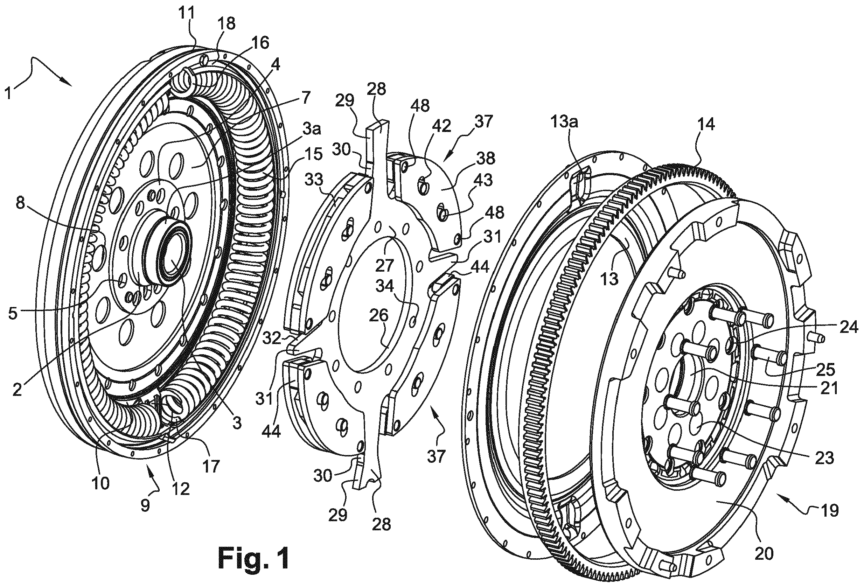

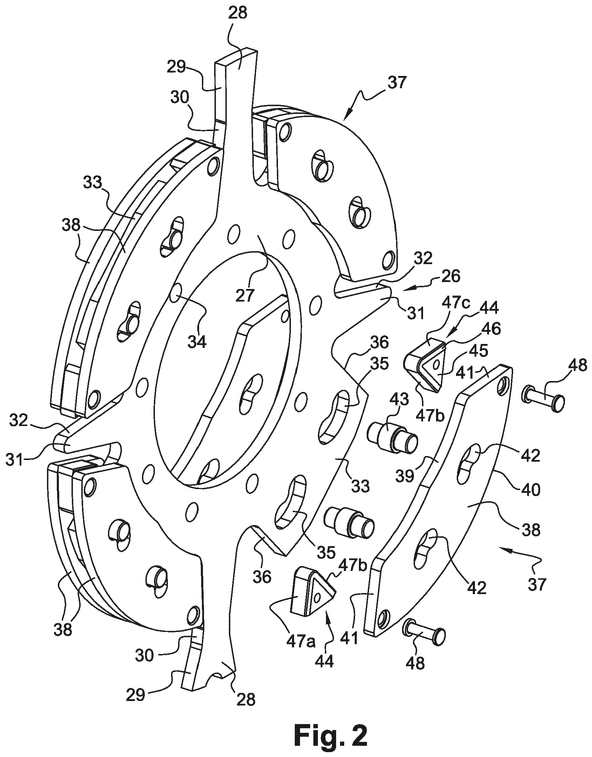

Un double volant amortisseur selon une première forme de réalisation de l'invention est représenté aux figures 1 et 2. Il comporte un volant primaire 1 comprenant un moyeu central 2, appelé moyeu primaire 2, comprenant une partie tubulaire cylindrique 3 à partir de laquelle une partie radiale, non représenté, s'étend radialement vers l'extérieur. Le moyeu primaire est ici équipé d'un roulement à billes 3a dont la fonction sera détaillée par la suite. Le moyeu primaire 2 est fixé à l'extrémité d'un vilebrequin d'un moteur à combustion interne et à une tôle annulaire 7, flexible axialement ou non. Pour ce faire la partie radiale du moyeu primaire est immobilisée entre la tôle annulaire 7 et une bride annulaire 4. Cette bride annulaire 4 est équipée de trous 5 pour le passage des vis de fixation au vilebrequin. La tôle 7 comporte des trous 8 en partie médiane, dont la fonction sera décrite plus loin.

Une masse d'inertie primaire 9 de forme annulaire est fixée à la périphérie radialement externe de la tôle annulaire 7.

La masse d'inertie primaire 9 comporte une partie radiale 10 dont la périphérie externe est prolongée vers l'avant par un rebord cylindrique 11. La face avant de la partie radiale 10 comporte deux éléments en saillie 12 diamétralement opposés, destinés à former des faces d'appui.

Le bord libre du rebord cylindrique 11 est fixé, par exemple par soudage, à la périphérie radialement externe d'une autre tôle annulaire 13, plus particulièrement à la face radiale arrière de cette tôle 13. Une couronne dentée 14, destinée à engrener avec une courroie de démarreur, est fixée sur la face avant de la tôle 13.

La tôle 13 comporte deux éléments 13a en saillie axialement vers l'arrière, diamétralement opposés, disposés en regard des éléments en saillie 12 de la masse d'inertie primaire et formant chacun deux faces d'appui.

La masse d'inertie primaire 9 et la tôle annulaire 13 délimitent un espace interne, destiné à être rempli de graisse et servant au logement d'organes élastiques courbes 15.

Ces organes élastiques 15 sont des ressorts de compression hélicoïdaux, montés dans l'espace interne précité. Plus particulièrement, lors du montage, les extrémités 16, 17 des organes élastiques courbes viennent en appui contre les faces d'appui définies par les éléments en saillie 12, 13a. La masse d'inertie primaire 9 et la tôle annulaire 13 forment ainsi une chambre.

Des goulottes 18 sont montées entre la paroi interne du rebord cylindrique 11 et les organes élastiques 15, ces goulottes 18 servant à l'appui des organes élastiques 15 lorsque ceux-ci se déforment par centrifugation en fonctionnement.

Un volant d'inertie secondaire 19 est monté mobile en rotation sur le volant d'inertie primaire 1.

Le volant d'inertie secondaire 19 comporte une masse d'inertie dite secondaire 20, comportant en son centre un alésage 21 servant au montage et au centrage de la masse d'inertie secondaire 20 sur la partie cylindrique 3 du moyeu primaire 2, par l'intermédiaire d'un palier tel qu'un roulement à billes 3a.

La masse d'inertie secondaire 20 comporte des trous 23 servant au passage d'un outil de vissage ou de dévissage des vis de fixation du volant primaire 1 sur l'extrémité du vilebrequin, et des trous 24 servant au montage de rivets 25. Ces rivets 25 permettent notamment de fixer un voile annulaire 26 à la seconde masse d'inertie 20.

Comme cela est mieux visible à la figure 2, le voile annulaire 26 comporte une partie annulaire 27 à partir de laquelle deux pattes diamétralement opposées 28 s'étendent radialement vers l'extérieur.

Chaque patte 28 comporte deux faces 29 opposées d'appui des organes élastiques, situées radialement à l'extérieur, et deux faces 30 opposées d'appui, dont la fonction sera mieux décrite après, situées radialement à l'intérieur par rapport aux faces d'appui 29.

Les faces 29 d'appui des organes élastiques 15 forment un angle l'une par rapport à l'autre et divergent l'une de l'autre vers l'extérieur. Les faces 30 forment également un angle l'une par rapport à l'autre et divergent radialement vers l'intérieur.

En fonctionnement, lorsqu'un couple est transmis du volant primaire 1 au volant secondaire 19, les organes élastiques 15 prennent appui, à une première extrémité 16 ou 17, contre les faces d'appui 12, 13a du volant primaire 1, et à une seconde extrémité 17 ou 16 contre les faces d'appui 29 des pattes 28 du voile annulaire 26, appartenant au volant secondaire 19.

Les organes élastiques 15 permettent d'amortir et d'absorber les vibrations et les acyclismes de rotation du moteur, comme cela est connu en soi.

Dans un mode de réalisation non représenté, les organes élastiques 15 sont associés à des moyens de friction permettant de dissiper l'énergie par frottement.

Au contraire, dans le mode de réalisation représenté, aucun moyen de friction supplémentaire n'est ajouté, l'énergie étant dissipée par le frottement naturel entre la masse primaire 9 et la masse secondaire 19, en grande partie du au frottement des organes élastiques 15.

Deux butées diamétralement opposées, se présentant sous la forme de pattes 31, s'étendent radialement vers l'extérieur depuis le voile annulaire 26. Chaque butée 31 présente deux faces latérales d'appui 32 opposées, formant un angle l'une avec l'autre et divergeant l'une de l'autre radialement vers l'intérieur.

Le voile annulaire 26 comporte en outre des zones de support 33 s'étendant radialement vers l'extérieur depuis la périphérie interne 27, au-delà des trous 34 et des rivets 25 correspondants servant à la fixation du voile annulaire 26 sur la masse d'inertie secondaire 19. Ces zones de support 33 sont par exemple au nombre de quatre et sont réparties sur la circonférence du voile annulaire 26.

Chaque zone de support 33 comporte deux trous 35 en forme d'arc, donc la concavité est tournée radialement vers l'intérieur (figure 2).

Chaque zone de support 33 définit en outre deux faces d'appui latérales 36 dont la fonction sera détaillée ci-après. Chaque face d'appui 36 s'étend dans un plan formant par exemple un angle compris entre 45 et 75° avec la direction radiale.

Des masses pendulaires 37 sont montées sur les zones de support 33 du voile annulaire 26.

Chaque masse pendulaire 37 comporte deux flancs 38 en forme générale d'arc montés de part et d'autre de la zone de support correspondante 33. Chaque flanc 38 comporte un bord radialement interne 39 et un bord radialement externe 40 reliés par des bords d'extrémités 41 (figure 2). Chaque flanc 38 comporte en outre deux trous 42 en forme d'arc, dont les concavités sont tournées radialement vers l'extérieur.

Les masses 37 sont montées sur les zones de support 33, par l'intermédiaire de rouleaux de guidage 43 engagés dans les trous oblongs en arc de cercle 42, 35 des flancs 38 et des zones de support 33. Le mouvement des masses 37 obtenu est du type pendulaire et est fonction de la forme des trous oblongs 42, 35 précités.

Chaque masse pendulaire 37 comporte en outre deux moyens de butée et d'amortissement latéraux 44, de forme générale triangulaire.

Chaque moyen de butée et d'amortissement 44 comporte une partie triangulaire métallique 45 (figure 2), définissant deux faces planes tournées respectivement du côté des faces d'appui 32, 36 des pattes 31 ou des faces d'appui 30 de la patte 28 et de la zone de support 33. Une bande élastomère 46 est appliquée sur les faces précitées. La bande élastomère est par exemple appliquée par collage, surmoulage ou clipsage. Cette bande 46 forme un V dont la pointe est tournée radialement vers l'intérieur et comporte deux faces planes 47a, 47b d'appui destinées à venir en butée respectivement sur les faces planes d'appui 32 et 36 des pattes 31 et de la zone support 33. En particulier, les faces planes 47a, 47b sont situées circonférentiellement au-delà des bords d'extrémité correspondants 41 des flancs 38.

Les parties triangulaires 45 des moyens de butée et d'amortissement 44 forment deux entretoises qui sont fixées via des rivets 48 traversant les extrémités latérales des flancs 38 ainsi que lesdites parties triangulaires 45. L'écartement entre les deux flancs 38 est ainsi défini par l'épaisseur des moyens de butée et d'amortissement 44.

Bien entendu, chaque moyen de butée et d'amortissement 44 peut être formé par un seul bloc élastomère, monté entre les flancs 38 des masses pendulaires 37 à l'aide du rivet 48 correspondant.

Chaque masse pendulaire 37 est montée circonférentiellement entre deux pattes 28, 31, la masse pendulaire 37 étant destinée à venir en appui sur l'une des pattes 28, 31 par l'intermédiaire d'un premier moyen de butée et d'amortissement 44, et à venir en appui sur l'autre des pattes 28, 31 par l'intermédiaire d'un second moyen de butée et d'amortissement 44.

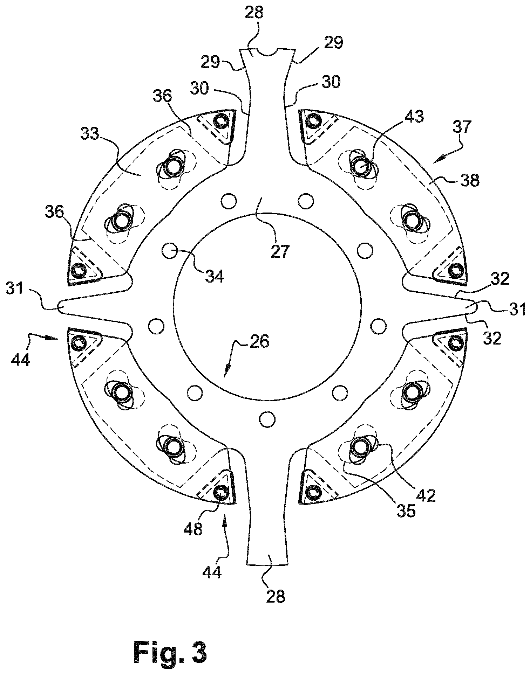

La figure 3 illustre les masses pendulaires dans une position de repos dans laquelle les moyens de butée et d'amortissement sont écartés des faces d'appui précitées.

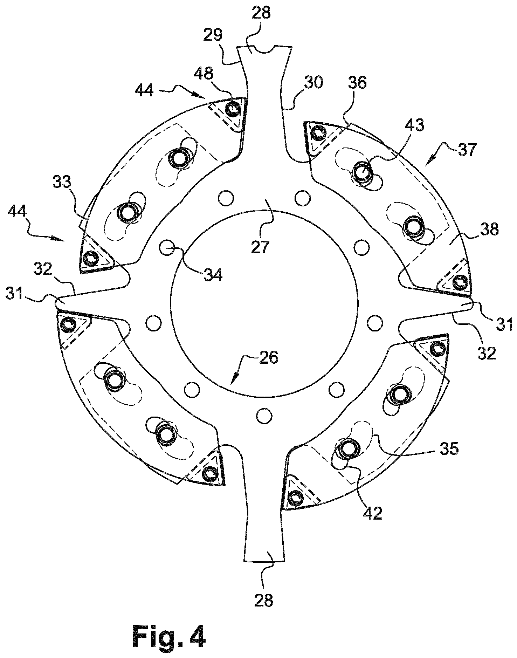

Au contraire, la figure 4 représente une position de butée dans laquelle, pour chaque masse pendulaire 37, l'une 47b des faces d'appui de l'un des moyens 44 vient en butée sur la face d'appui correspondante 36 de la zone de support 33 et l'autre 47a des faces d'appui de l'autre moyen 44 vient en appui sur la face d'appui 30 de la patte correspondante 28.

Le contact peut se produire simultanément dans ces deux zones, ou être légèrement décalé dans le temps. Dans ce dernier cas, les constantes de raideur en jeu augmentent progressivement, ce qui assure une certaine progressivité de l'amortissement réalisé.

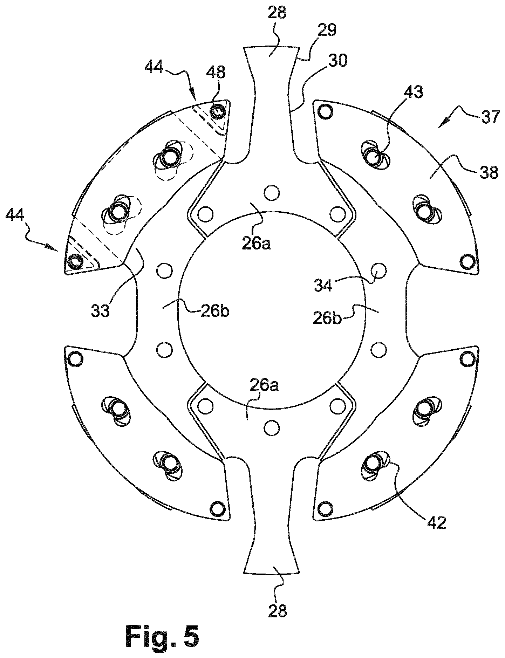

Comme cela est représenté à la figure 5, le voile annulaire 26 peut être dépourvu de pattes 31, certains moyens de butée et d'amortissement 44 adjacents étant alors destinés à venir en butée directement l'un sur l'autre.

Dans la forme de réalisation de la figure 5 également, le voile annulaire 26 comporte quatre secteurs indépendants 26a, 26b, dont deux 26a comportent les pattes 28 servant à l'appui des organes élastiques 15 et dont deux autres 26b comportent les zones de support 33 des masses pendulaires 37. Chaque secteur 26a, 26b comporte des trous 34 de fixation à sa périphérie radialement interne.

Comme vu précédemment, une telle structure permet de garantir que les secteurs 26b supportant les masses pendulaires 37 ne sont pas déformés lors de la transmission du couple au travers des secteurs 26a comportant les pattes 28 servant à l'appui des organes élastiques 15.

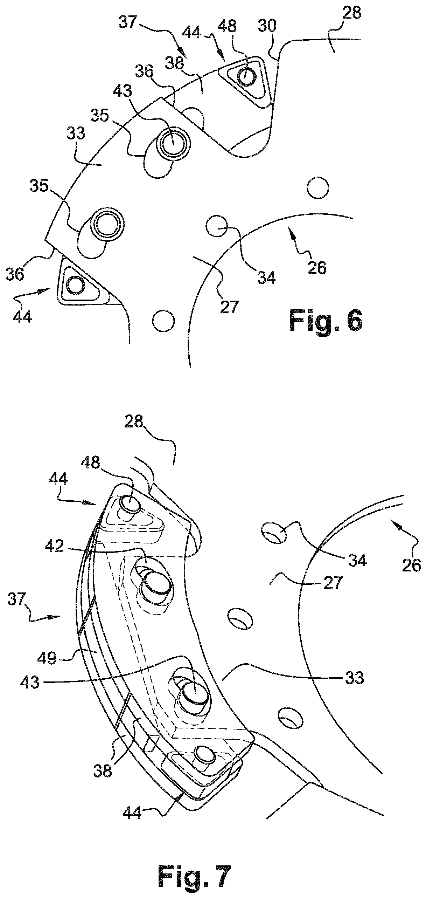

La figure 6 illustre une autre forme de réalisation dans laquelle, en position de butée des masses pendulaires 37, seule la face d'appui 47b de l'un des moyens de butée et d'amortissement 44 vient en appui sur le voile annulaire 26, en particulier sur la face d'appui 36 de la zone de support 33 correspondante. Ainsi, dans ce cas, les dimensions et les géométries des différents éléments des masses pendulaires 37 sont adaptées de façon à ce que les faces 47a ne viennent pas en appui contre les faces 30 des pattes 28.

En outre, comme cela est illustré à la figure 7, la masse de chaque masse pendulaire 37 peut être augmentée en y ajoutant une partie additionnelle 49 située radialement à l'extérieur de la zone de support 33 et montée entre les deux flancs 38. La partie additionnelle 49 est fixée à l'un des flancs 38 ou aux deux flancs 38 par des moyens appropriés.

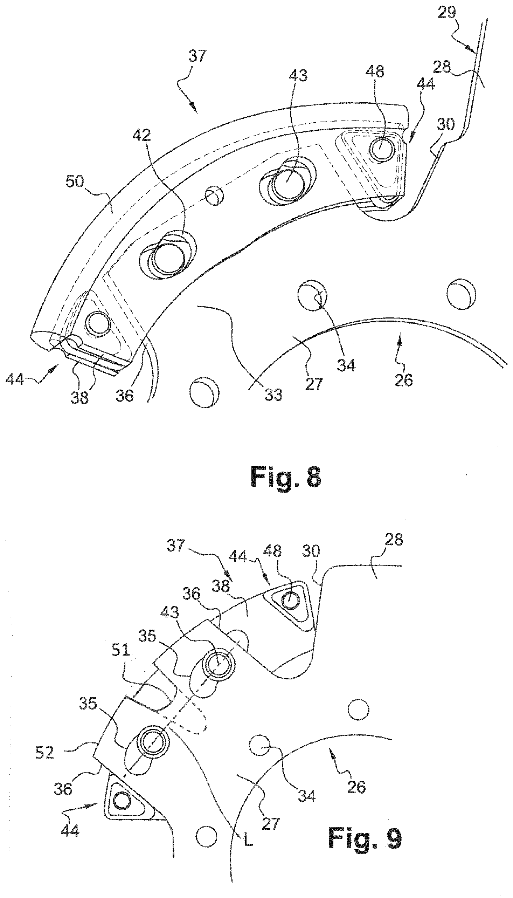

En variante, comme illustré à la figure 8, chaque masse pendulaire 37 a une forme d'arc et une section générale en U venant coiffer la zone de support du voile annulaire, définissant une base 50 en forme d'arc située radialement à l'extérieur de la zone de support 33 correspondante du voile annulaire 26 à partir de laquelle s'étendent deux flancs 38 situés de part et d'autre de ladite zone de support 33 et dirigés radialement vers l'intérieur.

Une telle structure permet également d'augmenter la masse de chaque masse pendulaire 37, par comparaison avec les formes de réalisation des figures 1 à 6.

Dans tous les cas, le décalage radial des zones de support 33 des masses pendulaires 37 à l'extérieur de la zone de fixation du voile annulaire 26 évite que lesdites zones de support 33 se déforment en fonctionnement.

Par ailleurs, il est possible d'ajuster les dimensions des faces d'appui planes 36 de la zone de support 33 ainsi que celles 47a, 47b des moyens de butée et d'amortissement 44 en fonction des besoins, de manière à offrir un bon amortissement de chaque masse pendulaire 37 dans ses positions extrêmes.

On peut ainsi réduire considérablement les chocs et les bruits générés par les masses pendulaires 37, en particulier lors du démarrage et de l'arrêt du moteur.

La figure 9 illustre un mode de réalisation de l'invention similaire à celui de la figure 6. Cependant, la figure 9 se distingue de la figure 6 en ce que la zone de support 33 comporte un évidement 51 situé entre les deux chemins de guidage 35 des moyens d'articulation 43 de la même masse pendulaire 37 et s'étendant sensiblement radialement vers l'intérieur.

Une ligne L passant par le centre des moyens d'articulation 43 peut être tracée comme visible en traits discontinus sur la figure 9. L'évidement 51 peut s'étendre par rapport à cette même ligne L au dessus de ladite ligne L comme illustré en trait plein sur la figure 9. Ou bien, l'évidement 51 peut s'étendre en dessous de la ligne L comme illustré en traits pointillés sur la figure 9. Enfin, l'évidement 51 peut s'étendre jusqu'à la ligne L.

Par au dessus de la ligne L, on entend une zone située entre ladite ligne L et le bord périphérique extérieur 52 de la zone de support. Par en dessous de la ligne L, on entend une zone située entre ladite ligne L et la partie annulaire 27 de sortie de couple du voile 26.

## Revendications

1. Dispositif de transmission de couple (1) pour un véhicule automobile, comportant un élément d'entrée de couple (9) et un voile annulaire (26) de sortie de couple mobiles en rotation l'un par rapport à l'autre, et des organes élastiques (15) montés entre l'élément d'entrée et le voile annulaire (26) de sortie de couple et agissant à l'encontre de la rotation de l'élément d'entrée de couple (9) par rapport au voile annulaire (26), le voile annulaire (26) comportant des pattes d'appui (28) des organes élastiques (15) s'étendant radialement vers l'extérieur depuis une zone annulaire de sortie de couple (25, 34) située au niveau de la périphérie interne (27) du voile annulaire (26), le dispositif comportant en outre des moyens d'amortissement pendulaires comprenant au moins une masse pendulaire (37) montée de façon mobile sur le voile annulaire (26), **caractérisé en ce que** le voile annulaire (26) comporte au moins une zone de support (33) de la masse pendulaire (37) s'étendant radialement vers l'extérieur depuis la zone annulaire de sortie de couple (25, 34) et présentant deux chemins de guidage (35) de moyens d'articulation (43) d'une même masse pendulaire (37), ladite zone de support (33) étant bordée par des évidements s'étendant radialement vers l'intérieur.

2. Dispositif selon la revendication 1, **caractérisé en ce que** lesdits évidements définissent deux faces d'appui latérales (36) de la zone de support (33), la masse pendulaire (37) comportant au moins deux moyens de butée et d'amortissement latéraux (44) aptes à venir en appui respectivement sur les faces d'appui latérales (36) de la zone de support (33), dans deux positions extrêmes de la masse pendulaire (37).

3. Dispositif selon la revendication 1 ou 2, **caractérisé en ce que** les faces d'appui latérales (36) de la zone de support (33) sont planes, les moyens de butée et d'amortissement (44) comportant des faces planes (47b) destinées à venir en appui contre les faces latérales (36) de la zone de support (33).

4. Dispositif selon la revendication 1 à 3, **caractérisé en ce qu'**au moins l'un des moyens de butée et d'amortissement (44) de la masse pendulaire (37) est apte à venir en appui contre l'une des pattes (28) d'appui des organes élastiques (15).

5. Dispositif selon la revendication 4, **caractérisé en ce qu'**il comporte au moins deux masses pendulaires (37) adjacentes montées circonférentiellement entre deux pattes (28) d'appui des organes élastiques (15) s'étendant radialement vers l'extérieur, des premières extrémités des masses pendulaires (37) venant en appui contre lesdites pattes (28), par l'intermédiaire de premiers moyens de butée et d'amortissement (44), des secondes extrémités des masses pendulaires (37) venant en appui l'une sur l'autre, par l'intermédiaire de seconds moyens de butée et d'amortissement (44).

6. Dispositif selon la revendication 4, **caractérisé en ce que** chaque masse pendulaire (37) est montée entre une patte (28) d'appui des organes élastiques (15) et une patte de butée (31) s'étendant radialement vers l'extérieur depuis la zone annulaire de sortie de couple du voile annulaire (26), la masse pendulaire (37) étant destinée à venir en appui sur l'une (28) des pattes par l'intermédiaire d'un premier moyen de butée et d'amortissement (44), et à venir en appui sur l'autre (31) des pattes par l'intermédiaire d'un second moyen de butée et d'amortissement (44).

7. Dispositif selon la revendication 5 ou 6, **caractérisé en ce que** les moyens de butée et d'amortissement latéraux (44) des masses pendulaires (37) comportent chacun une première face plane (47b) destinée à venir en appui sur la face latérale plane correspondante (36) de la zone de support (33) du voile annulaire (26), et une seconde face plane (47a) destinée à venir en appui sur une face plane (30, 32, 47a) de la patte correspondante (28, 31) ou de la masse pendulaire adjacente (37).

8. Dispositif selon l'une des revendications 4 à 7, **caractérisé en ce que** le voile annulaire (26) comporte plusieurs secteurs indépendants (26a, 26b) dont certains (26a) comportent les pattes (28) d'appui des organes élastiques (15) et dont au moins un autre (26b) comporte la zone de support (33) de la masse pendulaire (37), chaque secteur (26a, 26b) comportant des moyens de fixation (34, 25) à sa périphérie radialement interne.

9. Dispositif selon l'une des revendications 1 à 8, **caractérisé en ce que** la masse pendulaire (37) comporte deux flancs (38) en forme d'arc, disposés de part et d'autre de la zone de support (33) du voile annulaire (26), reliés entre eux par des entretoises (48) portant les moyens de butée et d'amortissement (44) de la masse pendulaire (37).

10. Dispositif selon la revendication 9, **caractérisé en ce que** la masse pendulaire (37) comporte une partie additionnelle (49) située radialement à l'extérieur de la zone de support (33) et montée entre les deux flancs (38).

11. Dispositif selon l'une des revendications 1 à 10, **caractérisé en ce que** la masse pendulaire (37) a une forme d'arc et une section générale en U venant coiffer la zone de support (33) du voile annulaire (26), définissant une base (50) en forme d'arc située radialement à l'extérieur de la zone de support (33) du voile annulaire (26) et à partir de laquelle s'étendent deux flancs (38) situés de part et d'autre de ladite zone de support (33) et dirigés radialement vers l'intérieur.

12. Dispositif selon l'une des revendications 1 à 11, **caractérisé en ce que** ladite zone de support (33) comporte au moins un évidement (51) situé entre les deux chemins de guidage (35) des moyens d'articulation (43) d'une même masse pendulaire (37) et s'étendant sensiblement radialement vers l'intérieur.

13. Dispositif selon la revendication 12, **caractérisé en ce que** l'évidement (51) s'étend, par rapport à une ligne L passant par le centre des moyens d'articulation (43) de la même masse pendulaire (37) :
- au dessus de ladite ligne L, ou
- en dessous de ladite ligne L, ou
- jusqu'à ladite ligne L.

## Patentansprüche

1. Vorrichtung zur Drehmomentübertragung (1) für ein Kraftfahrzeug, welche ein Drehmomenteingangselement (9) und eine ringförmige Scheibe (26) für den Drehmomentausgang, die relativ zueinander drehbeweglich sind, und elastische Organe (15), die zwischen dem Eingangselement und der ringförmigen Scheibe (26) für den Drehmomentausgang angebracht sind und der Drehung des Drehmomenteingangselements (9) in Bezug auf die ringförmige Scheibe (26) entgegenwirken, aufweist, wobei die ringförmige Scheibe (26) Stützlaschen (28) für die elastischen Organe (15) aufweist, die sich von einem ringförmigen Drehmomentausgangsbereich (25, 34), der sich am Innenumfang (27) der ringförmigen Scheibe (26) befindet, radial nach außen erstrecken, wobei die Vorrichtung außerdem Pendeldämpfungsmittel aufweist, die wenigstens eine Pendelmasse (37) umfassen, die beweglich an der ringförmigen Scheibe (26) angebracht ist, **dadurch gekennzeichnet, dass** die ringförmige Scheibe (26) wenigstens einen Auflagebereich (33) für die Pendelmasse (37) aufweist, der sich von dem ringförmigen Drehmomentausgangsbereich (25, 34) radial nach außen erstreckt und zwei Führungsbahnen (35) für Gelenkmittel (43) ein und derselben Pendelmasse (37) aufweist, wobei der Auflagebereich (33) von Aussparungen umrandet wird, die sich radial nach innen erstrecken.

2. Vorrichtung nach Anspruch 1, **dadurch gekennzeichnet, dass** die Aussparungen zwei seitliche Stützflächen (36) des Auflagebereichs (33) definieren, wobei die Pendelmasse (37) wenigstens zwei seitliche Anschlag- und Dämpfungsmittel (44) aufweist, die geeignet sind, in zwei Endpositionen der Pendelmasse (37) jeweils an einer der zwei seitlichen Stützflächen (36) des Auflagebereichs (33) zur Anlage zu kommen.

3. Vorrichtung nach Anspruch 1 oder 2, **dadurch gekennzeichnet, dass** die seitlichen Stützflächen (36) des Auflagebereichs (33) eben sind, wobei die Anschlag- und Dämpfungsmittel (44) ebene Flächen (47b) aufweisen, die dazu bestimmt sind, an den seitlichen Flächen (36) des Auflagebereichs (33) zur Anlage zu kommen.

4. Vorrichtung nach Anspruch 1 bis 3, **dadurch gekennzeichnet, dass** wenigstens eines der Anschlag- und Dämpfungsmittel (44) der Pendelmasse (37) geeignet ist, an einer der Stützlaschen (28) für die elastischen Organe (15) zur Anlage zu kommen.

5. Vorrichtung nach Anspruch 4, **dadurch gekennzeichnet, dass** sie wenigstens zwei benachbarte Pendelmassen (37) aufweist, die in Umfangsrichtung zwischen zwei sich radial nach außen erstreckenden Stützlaschen (28) für die elastischen Organe (15) angebracht sind, wobei erste Enden der Pendelmassen (37) über erste Anschlag- und Dämpfungsmittel (44) an den Laschen (28) zur Anlage kommen, wobei zweite Enden der Pendelmassen (37) über zweite Anschlag- und Dämpfungsmittel (44) aneinander zur Anlage kommen.

6. Vorrichtung nach Anspruch 4, **dadurch gekennzeichnet, dass** jede Pendelmasse (37) zwischen einer Stützlasche (28) für die elastischen Organe (15) und einer Anschlaglasche (31), die sich von dem ringförmigen Drehmomentausgangsbereich der ringförmigen Scheibe (26) aus radial nach außen erstreckt, angebracht ist, wobei die Pendelmasse (37) dazu bestimmt ist, an einer (28) der Laschen über ein erstes Anschlag- und Dämpfungsmittel (44) zur Anlage zu kommen und an der anderen (31) der Laschen über ein zweites Anschlag- und Dämpfungsmittel (44) zur Anlage zu kommen.

7. Vorrichtung nach Anspruch 5 oder 6, **dadurch gekennzeichnet, dass** die seitlichen Anschlag- und Dämpfungsmittel (44) der Pendelmassen (37) jeweils eine erste ebene Fläche (47b), die dazu bestimmt ist, an der entsprechenden ebenen seitlichen Fläche (36) des Auflagebereichs (33) der ringförmigen Scheibe (26) zur Anlage zu kommen, und eine zweite ebene Fläche (47a), die dazu bestimmt ist, an einer ebenen Fläche (30, 32, 47a) der entsprechenden Lasche (28, 31) oder der benachbarten Pendelmasse (37) zur Anlage zu kommen, aufweisen.

8. Vorrichtung nach einem der Ansprüche 4 bis 7, **dadurch gekennzeichnet, dass** die ringförmige Scheibe (26) mehrere unabhängige Sektoren (26a, 26b) aufweist, von denen einige (26a) die Stützlaschen (28) für die elastischen Organe (15) aufweisen und von denen wenigstens ein anderer (26b) den Auflagebereich (33) der Pendelmasse (37) aufweist, wobei jeder Sektor (26a, 26b) Befestigungsmittel (34, 25) an seinem radial inneren Umfang aufweist.

9. Vorrichtung nach einem der Ansprüche 1 bis 8, **dadurch gekennzeichnet, dass** die Pendelmasse (37) zwei bogenförmige Seitenteile (38) aufweist, die beiderseits des Auflagebereichs (33) der ringförmigen Scheibe (26) angeordnet sind und miteinander durch Abstandsstücke (48) verbunden sind, welche die Anschlag- und Dämpfungsmittel (44) der Pendelmasse (37) tragen.

10. Vorrichtung nach Anspruch 9, **dadurch gekennzeichnet, dass** die Pendelmasse (37) einen zusätzlichen Teil (49) aufweist, der sich radial außerhalb des Auflagebereichs (33) befindet und zwischen den zwei Seitenteilen (38) angebracht ist.

11. Vorrichtung nach einem der Ansprüche 1 bis 10, **dadurch gekennzeichnet, dass** die Pendelmasse (37) eine bogenförmige Gestalt aufweist, und einen allgemein U-förmigen Querschnitt, der den Auflagebereich (33) der ringförmigen Scheibe (26) überdeckt, wobei er eine bogenförmige Basis (50) definiert, die sich radial außerhalb des Auflagebereichs (33) der ringförmigen Scheibe (26) befindet und von der aus sich zwei Seitenteil (38) erstrecken, die sich beiderseits des Auflagebereichs (33) befinden und radial nach innen gerichtet sind.

12. Vorrichtung nach einem der Ansprüche 1 bis 11, **dadurch gekennzeichnet, dass** der Auflagebereich (33) wenigstens eine Aussparung (51) aufweist, die sich zwischen zwei Führungsbahnen (35) für die Gelenkmittel (43) ein und derselben Pendelmasse (37) befindet und sich im Wesentlichen radial nach innen erstreckt.

13. Vorrichtung nach Anspruch 12, **dadurch gekennzeichnet, dass** sich die Aussparung (51), bezogen auf eine Linie L, die durch den Mittelpunkt der Gelenkmittel (43) ein und derselben Pendelmasse (37) verläuft, erstreckt:
- oberhalb der Linie L, oder
- unterhalb der Linie L, oder
- bis zur Linie L.

## Claims

1. Torque transmission device (1) for a motor vehicle, comprising a torque-input element (9) and an torque-output annular web (26) both capable of rotational movement with respect to one another, and elastic members (15) mounted between the input element and the torque-output annular web (26) and acting against the rotation of the torque-input element (9) with respect to the annular web (26), the annular web (26) comprising pressing lugs (28) for the elastic members (15) extending radially outwards from an torque-output annular zone (25, 34) situated at the internal periphery (27) of the annular web (26), the device further comprising pendular damping means comprising at least one pendular mass (37) mounted with the ability to move on the annular web (26), **characterized in that** the annular web (26) comprises at least one support zone (33) for the pendular mass (37) extending radially outwards from the torque-output annular zone (25, 34) and having two guideways (35) for means (43) of articulation of the one same pendular mass (37), the said support zone (33) being flanked by recesses extending radially inwards.

2. Device according to Claim 1, **characterized in that** the said recesses define two lateral bearing faces (36) of the support zone (33), the pendular mass (37) comprising at least two lateral damping and stop means (44) able to come to bear respectively on the lateral bearing faces (36) of the support zone (33) in two extreme positions of the pendular mass (37).

3. Device according to Claim 1 or 2, **characterized in that** the lateral bearing faces (36) of the support zone (33) are planar, the damping and stop means (44) comprising planar faces (47b) intended to come to bear against the lateral faces (36) of the support zone (33).

4. Device according to Claim 1 to 3, **characterized in that** at least one of the damping and stop means (44) of the pendular mass (37) is able to come to bear against one of the pressing lugs (28) for the elastic members (15).

5. Device according to Claim 4, **characterized in that** it comprises at least two adjacent pendular masses (37) mounted circumferentially between two pressing lugs (28) for the elastic members (15) extending radially outwards, first ends of the pendular masses (37) coming to bear against the said lugs (28), via first damping and stop means (44), second ends of the pendular masses (37) coming to bear against one another via second damping and stop means (44).

6. Device according to Claim 4, **characterized in that** each pendular mass (37) is mounted between a pressing lug (28) for the elastic members (15) and a stop lug (31) extending radially outwards from the torque-output annular zone of the annular web (26), the pendular mass (37) being intended to come to bear on one (28) of the lugs via a first damping and stop means (44), and to come to bear against the other (31) of the lugs via a second damping and stop means (44).

7. Device according to Claim 5 or 6, **characterized in that** the lateral damping and stop means (44) of the pendular masses (37) each comprise a first planar face (47b) intended to come to bear against the corresponding planar lateral face (36) of the support zone (33) of the annular web (26), and a second planar face (47a) intended to come to bear against a planar face (30, 32, 47a) of the corresponding lug (28, 31) or of the pendular mass (37) that is adjacent.

8. Device according to one of Claims 4 to 7, **characterized in that** the annular web (26) comprises several independent sectors (26a, 26b) of which some (26a) comprise the pressing lugs (28) for the elastic members (15) and of which at least one other (26b) comprises the support zone (33) for the pendular mass (37), each sector (26a, 26b) comprising fixing means (34, 25) at its radially internal periphery.

9. Device according to one of Claims 1 to 8, **characterized in that** the pendular mass (37) comprises two arc-shaped sidewalls (38) located one on each side of the support zone (33) of the annular web (26) and connected to one another by spacers (48) bearing the damping and stop means (44) of the pendular mass (37).

10. Device according to Claim 9, **characterized in that** the pendular mass (37) comprises an additional part (49) situated radially on the outside of the support zone (33) and mounted between the two sidewalls (38) .

11. Device according to one of Claims 1 to 10, **characterized in that** the pendular mass (37) is arc-shaped and has a U-shaped overall cross section fitting over the support zone (33) of the annular web (26), defining an arc-shaped base (50) situated radially on the outside of the support zone (33) of the annular web (26) and from which there extend two sidewalls (38) situated one on each side of the said support zone (33) and directed radially inwards.

12. Device according to one of Claims 1 to 11, **characterized in that** the said support zone (33) comprises at least one recess (51) situated between the two guideways (35) for the articulation means (43) of the one same pendular mass (37) and extending substantially radially inwards.

13. Device according to Claim 12, **characterized in that** the recess (51) extends, with respect to a line L passing through the centre of the means (43) of articulation of the one same pendular mass (37):
- above the said line L, or
- below the said line L, or
- as far as the said line L.
